# EUROPÄISCHE PATENTSCHRIFT

(11) **EP 1 076 405 B1**
(45) Veröffentlichungstag und Bekanntmachung des Hinweises auf die Patenterteilung: **25.01.2006**
(21) Anmeldenummer: 00116150.4
(22) Anmeldetag: 01.08.2000
(51) Int. Cl.: H02M 7/06

(54) **Gleichrichter mit Mittelpunkteinspeisung**
Rectifier with central point feeding
Redresseur avec alimentation au point milieu

(30) Priorität: 11.08.1999 DE 19937924
(43) Veröffentlichungstag der Anmeldung: 14.02.2001
(73) Patentinhaber: Patent-Treuhand-Gesellschaft für elektrische Glühlampen mbH, 81543 München (DE)
(72) Erfinder: Franck, Felix, Dr., 80333 München (DE)

(56) Entgegenhaltungen:
- EP-A- 0 026 356
- WO-A-98/08294
- FR-A- 1 422 994
- HAMILL D C: "Half bridge class DE rectifier" ELECTRONICS LETTERS, IEE STEVENAGE, GB, Bd. 31, Nr. 22, 26. Oktober 1995 (1995-10-26), Seiten 1885-1886, XP006003573 ISSN: 0013-5194
- PATENT ABSTRACTS OF JAPAN vol. 006, no. 077 (E-106), 14. Mai 1982 (1982-05-14) & JP 57 013971 A (FUJITSU LTD), 25. Januar 1982 (1982-01-25)
- PATENT ABSTRACTS OF JAPAN vol. 009, no. 004 (E-288), 10. Januar 1985 (1985-01-10) & JP 59 153465 A (NITSUSHIN DENKI KK), 1. September 1984 (1984-09-01)

## Beschreibung

Die vorliegende Erfindung betrifft einen Gleichrichter mit Mittelpunkteinspeisung, insbesondere einen Gleichrichter mit Mittelpunkteinspeisung gemäß dem Oberbegriff von Anspruch 1.

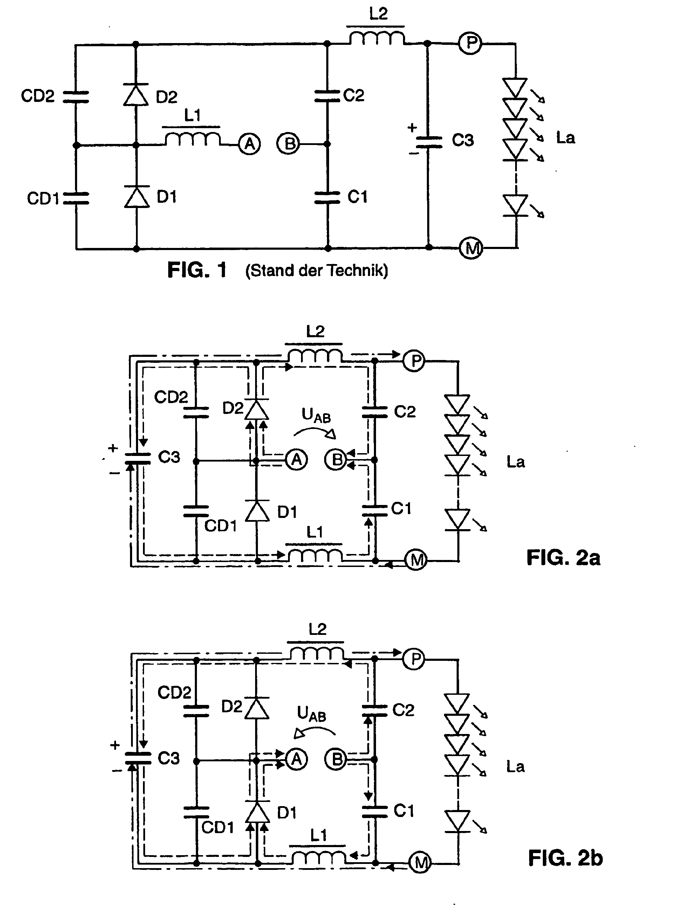

Fig. 1 zeigt einen derartigen aus dem Stand der Technik bekannten Gleichrichter mit Mittelpunkteinspeisung, wobei der Eingang von den Eingangsklemmen A und B gebildet wird, während der Ausgang von den Ausgangsklemmen P und M gebildet wird. Die Ausgangsklemme P entspricht hierbei dem Pluspol, die Ausgangsklemme M dem Minuspol. Um einen Gleichrichter am Ausgang eines freischwingenden Wechselrichters betreiben zu können, d.h. die Ansteuerung der Schalttransistoren erfolgt durch direkte Rückkoppelung des Laststroms, ist ein leicht induktiver Charakter des auf den Wechselrichter folgenden Gleichrichters erwünscht.

Der in Fig. 1 dargestellte Gleichrichter umfaßt eine Serienschaltung aus einem ersten Koppelkondensator C₁ und einem zweiten Koppelkondensator C₂, deren Mittelpunkt mit der Eingangsklemme B verbunden ist. Die Eingangsklemme A ist über eine Induktivität L₁ mit dem Mittelpunkt einer Serienschaltung aus einer ersten Diode D₁ und einer zweiten Diode D₂ verbunden. Jeder Diode ist ein Umschwingkondensator C_{D1} bzw. C_{D2} parallel geschaltet. Die Serienschaltung aus dem ersten und dem zweiten Koppelkondensator C₁, C₂ ist über eine Induktivität L₂ mit der Ausgangsklemme P verbunden. Parallel zum Ausgang liegt ein Speicherkondensator C₃. Als Last ist beispielhaft eine Serienschaltung mehrerer Leuchtdioden eingezeichnet.

In der Schaltungsanordnung von Fig. 1 übernimmt die Induktivität L2 die Funktion einer Glättungsdrossel, d.h. sie glättet den an den Ausgangsklemmen P, M bereitgestellten Gleichstrom, während die Induktivität L1 für den induktiven Charakter des Gleichrichters sorgt

Bei der in Fig. 1 dargestellten Schaltungsanordnung wirken sich insbesondere die Induktivitäten L1 und L2 nachteilig aus, da diese ihrer Natur nach im Verhältnis zu anderen Bauelementen relativ groß sind und damit viel des auf einer Platine knapp bemessenen Platzes beanspruchen. Sie sind darüberhinaus teuer und im Vergleich zu SMD-Bauteilen kompliziert zu montieren.

Die JP 04 222469A und das zugehörige PATENT ABSTRACTS OF JAPAN vol. 016, no. 570 (E-1297), 10.12.1992 beschreiben eine Abfolge eines Netzgleichrichters DB mit einem Wechselrichter Q1Q2, der eine Last (1) speist.

Aus der FR-A 1 422 994 ist ein Gleichrichter mit Mittelpunkteinspeisung bekannt, mit folgenden Merkmalen:
eine erste und eine zweite Eingangsklemme (A,B), die einen Eingang des Gleichrichters bilden,
eine erste und eine zweite Ausgangsklemme (P,M), die einen ersten Ausgang des Gleichrichters bilden, wobei die erste Ausgangsklemme (P) den Pluspol, die zweite Ausgangsklemme (M) den Minuspol des ersten Ausgangs des Gleichrichters bildet,
eine Serienschaltung aus einem ersten und einem zweiten Koppelkondensator (C1, C2), die parallel zum ersten Ausgang angeordnet ist, wobei der Mittelpunkt der Serienschaltung mit der zweiten Eingangsklemme (B) verbunden ist, eine Serienschaltung aus einer ersten und einer zweiten Diode (d1,d2), wobei der Mittelpunkt der Serienschaltung aus der ersten und der zweiten Diode (d1 ,d2) mit der ersten Eingangsklemme (A) verbunden ist, und die erste Diode (d1) über eine erste Induktivität (L1) mit dem ersten Koppelkondensator (C1) und die zweite Diode (d2) über eine zweite Induktivität (L2) mit dem zweiten Koppelkondensator (C2) verbunden ist

Die Aufgabe der vorliegenden Erfindung besteht deshalb darin, eine gegenüber dem Stand der Technik gemäß Fig. 1 verbesserte Schaltungsanordnung bereitzustellen, bei der die Nachteile des Stands der Technik reduziert sind.

Diese Aufgabe wird durch die Lehre von Patentanspruch 1 gelöst

Diese Lösung bietet den Vorteil, daß beide Induktivitäten zugleich als Umschwinginduktivität, nämlich die Parallelschaltung von L1 und L2, als auch als Glättungsinduktivität, nämlich die Serienschaltung aus L1 und L2, wirken.

Hierdurch ist die Belastung auf beide Induktivitäten gleich verteilt, weshalb einfachere Bauteile verwendbar sind. Dies resultiert in einer deutlichen Kostenreduktion. Insbesondere braucht die Induktivität L1 nicht so stark, die Induktivität L2 nicht so groß ausgeführt zu werden wie in der aus dem Stand der Technik bekannten Schaltungsanordnung gemäß Fig. 1. Der Platzbedarf für die Induktivität L1 und L2 auf der Platine wurde dadurch deutlich reduziert

Bei einer besonders vorteilhaften Ausführungsform kann für jeden weiteren Ausgang des Gleichrichters folgende Kombination der entsprechenden Kombination des ersten Ausgangs parallel geschaltet werden: ein weiterer Speicherkondensator, eine weitere zweite Induktivität, eine weitere zweite Diode sowie ein weiterer zweiter Koppelkondensator. Beim Stand der Technik gemäß Fig. 1 lassen sich mehrere Ausgänge dadurch bereit stellen, daß am Ausgang P,M mehrere Verbraucher parallelgeschaltet werden. Im Falle von Leuchtdioden bestimmt sich ein Verbraucher durch jeweils.einen Vorwiderstand in Serie zu einer Serienschaltung mehrerer Leuchtdioden. Die differentielle Ausgangsimpedanz wird hierbei durch den jeweiligen Vorwiderstand bestimmt. Im Gegensatz dazu läßt sich die differentielle Ausgangsimpedanz, entsprechend dem Gleichstromwiderstand eines einzelnen Zweiges, durch die erwähnte erfinderische Maßnahme um mehr als den Faktor 5 erhöhen, d.h. unterschiedliche Spannungen an den jeweiligen Ausgängen führen zu einer -.im Vergleich zum Stand der Technik - um mehr als den Faktor 5 reduzierten Stromabweichung zwischen den jeweiligen Ausgängen.

Vorzugsweise ist der ersten Diode ein erster Umschwingkondensator und/oder mindestens einer und/oder jeder zweiten Diode ein jeweiliger zweiter Umschwingkondensator parallel geschaltet. Die Umschwingkondensatoren sind vorzugsweise als ZVS-Resonanzkondensatoren ausgeführt.

Bevorzugt ist der Kapazitätswert des ersten Koppelkondensators im wesentlichen gleich der Summe der Kapazitätswerte aller zweiten Koppelkondensatoren und liegt vorzugsweise zwischen 10 nF und 200 nF. Der Kapazitätswert jedes Speicherkondensators beträgt im wesentlichen etwa das Zweifache des Kapazitätswerts des ersten Koppelkondensators.

Besonders vorteilhaft ist die Kopplung der ersten Induktivität mit mindestens einer zweiten Induktivität und/oder die Kopplung von mindestens zwei der zweiten Induktivitäten miteinander. Dies bietet die Möglichkeit, mindestens zwei Induktivitäten durch ein einziges Bauteil zu realisieren, d.h. mindestens zwei Induktivitäten sind auf einem einzigen Kern gewickelt. Hieraus ergibt sich eine weitere Reduktion des für die Induktivitäten benötigten Platzes.

Wird die erste und mindestens eine.der zweiten Induktivitäten miteinander gekoppelt, so ist die Kopplung vorzugsweise dergestalt, daß die Hauptinduktivitäten der ersten und der mindestens einen zweiten Induktivität zu einer Glättung des Ausgangsstroms führen und daß die Streuinduktivitäten der ersten und der mindestens einen zweiten Induktivität.als Umschwinginduktivität wirken. Die hierdurch erzielte Belastungsverteilung erlaubt eine kleinere Dimensionierung der Bauteile und führt zu einer Erhöhung deren Lebensdauer.

Weitere vorteilhafte Ausgestaltungen der.Erfindung sind den abhängigen Ansprüchen zu entnehmen.

Im Folgenden werden Ausführungsbeispiele der Erfindung unter Hinweis auf die beigefügten Zeichnungen näher beschrieben. Es stellen dar:
- Fig. 1: einen Gleichrichter mit Mittelpunkteinspeisung aus dem Stand der Technik;
- Fig. 2: eine erste Ausführungsform eines erfindungsgemäßen Gleichrichters, wobei gestrichelt der Verlauf des Gleichstroms, punktiert der Verlauf der Wechselstromanteile eingezeichnet sind. Während Fig. 2a die Verläufe von Gleich- und Wechselstrom bei positiver Spannung U_{AB} zwischen den Eingangsklemmen A und B zeigt, zeigt Fig. 2b deren Verläufe bei negativer Eingangsspannung U_{AB}.
- Fig. 3: eine zweite Ausführungsform der Erfindung, bei der die Induktivitäten L₁ und L₂ miteinander gekoppelt sind, und

- Fig. 4: eine dritte Ausführungsform der Erfindung mit mehreren parallelen Ausgängen P₁, P₂ usw..

Sofern nicht weiter angegeben bezeichnen in den Figuren 2a, 2b, 3 und 4 gleiche Bezugszeichen gleiche Bauteile. Beispielhaft ist als Last in allen Figuren eine Serienschaltung mehrerer Leuchtdioden eingezeichnet. Generell ist der erfindungsgemäße Gleichrichter jedoch für alle Anwendungen einsetzbar, die mit einer Gleichstromquelle betreibbar sind.

Fig. 2a zeigt eine erste Ausführungsform eines erfindungsgemäßen Gleichrichters. Er umfaßt eine Serienschaltung zweier Koppelkondensatoren C₁, C₂, deren Mittelpunkt mit der Eingangsklemme B verbunden ist. Der Mittelpunkt einer Serienschaltung einer ersten Diode D₁ sowie einer zweiten Diode D₂ ist mit der Eingangsklemme A verbunden. Parallel zu jeder Diode ist ein Umschwingkondensator C_{D1} bzw. C_{D2} angeordnet. Die Diode D₂ ist über eine Induktivität L₂ mit dem Koppelkondensator C₂ verbunden, während die Diode D₁ über eine Induktivität L₁ mit dem Koppelkondensator C₁ verbunden ist. Der Verbindungspunkt der Induktivität L₂ und des Koppelkondensators C₂ bildet eine erste Ausgangsklemme P, die den Pluspol darstellt. Der Verbindungspunkt der Induktivität L₁ und des Koppelkondensators C₁ bildet eine zweite Ausgangsklemme M, die den Minuspol darstellt. Parallel zum Diodenzweig, umfassend die Dioden D₁ und D₂, liegt ein Speicherkondensator C₃.

In den Fig. 2a und 2b ist der Gleichstromverlauf gestrichelt, die Wechselstromverläufe punktiert eingezeichnet. Fig. 2a zeigt die jeweiligen Verläufe für eine positive Spannung U_{AB} an den Eingangsklemmen A, B, während Fig. 2b die entsprechenden Stromverläufe bei negativer Eingangsspannung U_{AB} zeigt.

Zunächst zu Fig. 2a: Ausgehend von der Eingangsklemme A fließt ein erster Teil des Wechselstroms in der aus der Diode D₂, der Induktivität L₂ sowie dem Koppelkondensator C₂ gebildeten Masche zur zweiten Eingangsklemme B. Ein zweiter Anteil des Wechselstroms fließt über die Diode D₂, den Speicherkondensator C₃ sowie die Induktivität L₁ und den Koppelkondensator C₁ zur zweiten Eingangsklemme B. Dieser zweite Stromanteil lädt den Speicherkondensator C₃. Der Gleichstrom fließt in der Masche Ausgangsklemme M, Induktivität L₁, Speicherkondensator C₃, Induktivität L₂, Ausgangsklemme P durch die Last La. In Fig. 2b ist der Gleichstromverlauf wie benötigt gegenüber Fig. 2a unverändert, während jedoch ein erster Wechselstromanteil nunmehr ausgehend von der Eingangsklemme B über den Koppelkondensator C₁, die Induktivität L₁, die Diode D₁ zur zweiten Eingangsklemme A fließt. Der zweite Wechselstromanteil fließt über den zweiten Koppelkondensator C₂, die Induktivität L₂, den Speicherkondensator C₃, die Diode D₁ zur zweiten Eingangsklemme A. Auch hier lädt dieser zweite Wechselstromanteil den Speicherkondensator C₃.

Aus der Ladungsbilanz in C₃ läßt sich deutlich erkennen, daß der Gleichstrom maximal die Hälfte des Wechselstroms betragen kann. Während eine Hälfte des Wechselstroms den Speicherkondensator C₃ lädt, dient die andere Hälfte zum Nachladen jeweils eines Koppelkondensators C₁ bzw. C₂.

Deutlich zu erkennen ist auch, daß die Summe aus der Induktivität L₁ und L₂ in Serie zu den Ausgangsklemmen M und P liegt, während die Parallelschaltung der Induktivitäten L₁ und L₂ in Serie zu den Eingangsklemmen A und B wirkt.

Beide Induktivitäten L₁, L₂ werden daher gleich belastet und können durch identische Bauteile realisiert werden. Während die Umschwingkondensatoren C_{D1} und C_{D2} einen Kapazitätswert von einigen nF haben und als ZVS-Resonanzkondensatoren wirken, besitzen die Kondensatoren C₁, C₂ und C₃ deutliche größere Werte. Die Koppelkondensatoren C₁ und C₂, die direkt der Last La zugewandt liegen, entkoppeln die Last von sämtlichen Wechselstromanteilen. Ihr Kapazitätswert liegt vorzugsweise im Bereich von 10 bis 200 nF.

Der Wert des Speicherkondensators C₃ ist etwa doppelt so groß wie der des Koppelkondensators C₁. Die Induktivitäten L₁ und L₂ entkoppeln den durch C₃ "gestützten" Diodenzweig, umfassend die Dioden D₁ und D₂, vom kapazitiven Zweig aus den Koppelkondensatoren C₁ und C₂. Die Kapazität zwischen den Ausgangsklemmen P und M ist damit deutlich geringer als im Stand der Technik gemäß Fig. 1. Bezüglich der Charakteristik des Ausgangs zwischen den Ausgangsklemmen P und M wird die Induktivität L₁ + L₂ dominant. Insbesondere für den Betrieb von Leuchtdioden ist dies bevorzugt, da eine geringere Ausgangskapazität sowie größere Ausgangsinduktivität eher einer idealen Stromquelle nahekommt als die Verhältnisse beim Stand der Technik gemäß Fig. 1.

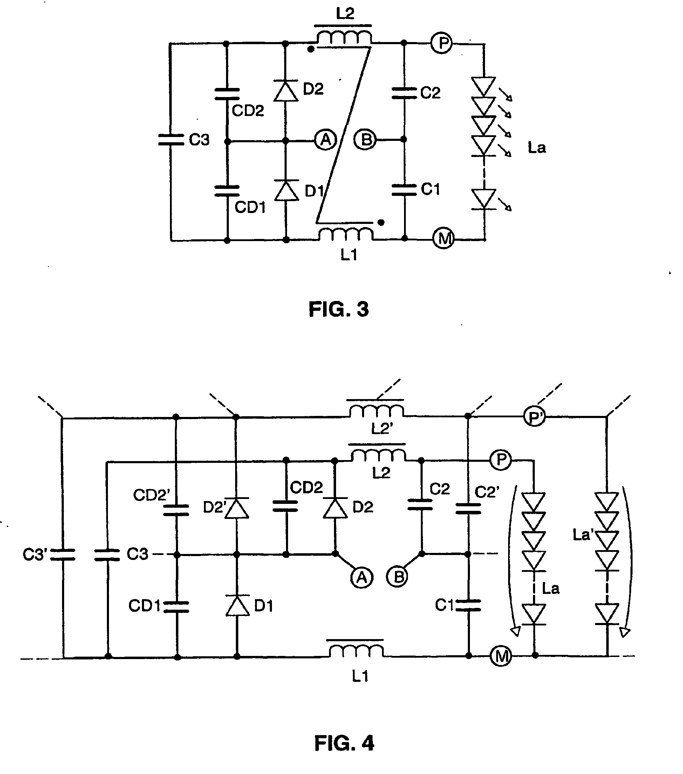

Eine weitere Ausführungsform des erfindungsgemäßen Gleichrichters ist in Fig. 3 dargestellt. Hierbei sind die Induktivitäten L₁ und L₂ miteinander gekoppelt und zwar derart, daß die jeweiligen Hauptinduktivitäten zu einer Glättung des Ausgangsstroms führen und daß die Streuinduktivitäten der jeweiligen Induktivitäten als Umschwinginduktivität wirken. Werden die beiden Induktivitäten L₁ und L₂ auf einem Kern gewickelt, so läßt sich dieser Kern doppelt nutzen.

Fig. 4 zeigt eine Weiterbildung des erfindungsgemäßen Gleichrichters und weist mehrere Ausgänge auf. Der erste Ausgang wird von den Ausgangsklemmen P und M gebildet, der zweite Ausgang von den Ausgangsklemmen P' und M usw.. Für jeden weiteren Ausgang ist ein weiterer Koppelkondensator C₂', eine weitere Induktivität L₂', eine weitere Diode D₂', ein weiterer Umschwingkondensator C_{D2}' sowie ein weiterer Speicherkondensator C₃' vorzusehen. Hinsichtlich der Induktivitäten kann vorgesehen sein, daß mindestens eine Induktivität L₂, L₂' mit der Induktivität L₁ gekoppelt ist. Es kann weiterhin vorgesehen werden, daß Induktivitäten L₂, L₂' usw. untereinander gekoppelt sind. Bei dem Gleichrichter gemäß Fig. 4 wirkt dieselbe Ausgangsimpedanz für alle Ausgänge. Im Gegensatz zum beschriebenen Stand der Technik ist ein Vorwiderstand nicht nötig. Durch diese Maßnahme läßt sich die differentielle Ausgangsimpedanz im Vergleich zum Stand der Technik um einen Faktor größer 5 gegenüber dem Gleichstromwiderstand eines einzelnen Zweigs bei der Realisierung gemäß des erwähnten..Standes der Technik erhöhen. Spannungsschwankungen an den verschiedenen Ausgängen führen daher zu wesentlich geringeren Stromschwankungen.

## Patentansprüche

1. Gleichrichter mit Mittelpunkteinspeisung, zum Betreiben am Ausgang eines freischwingenden Wechselrichters, umfassend:
eine erste und eine zweite Eingangsklemme (A,B), die einen Eingang des Gleichrichters bilden,
eine erste und eine zweite Ausgangsklemme (P,M), die einen ersten Ausgang des Gleichrichters bilden, wobei die erste Ausgangsklemme (P) einen Pluspol, die zweite Ausgangsklemme (M) einen Minuspol des ersten Ausgangs des Gleichrichters bildet,
eine Serienschaltung aus einem ersten und einem zweiten Koppelkondensator (C1, C2), die parallel zum ersten Ausgang angeordnet ist, wobei ein Mittelpunkt der Serienschaltung mit der zweiten Eingangsklemme (B) verbunden ist,
eine Serienschaltung aus einer ersten und einer zweiten Diode (D1, D2), wobei ein Mittelpunkt der Serienschaltung aus der ersten und der zweiten Diode (D1, D2) mit der ersten Eingangsklemme (A) verbunden ist, und die erste Diode (D1) über eine erste Induktivität (L1) dem ersten Koppelkondensator (C1) und die zweite Diode (D2) über eine zweite Induktivität (L2) mit dem zweiten Koppelkondensator (C2) verbunden ist.
**dadurch gekennzeichnet,**
**daß** ein Speicherkondensator (C3) parallel zur Serienschaltung der ersten und zweiten Diode (D1, D2) angeordnet ist.

2. Gleichrichter nach Anspruch 1,
**dadurch gekennzeichnet,**
**daß** für eine jeden weiteren Ausgang (P', M) des Gleichrichters eine folgende Kombination der entsprechenden Kombination des ersten Ausgangs (P, M) parallelgeschaltet ist
ein weiterer Speicherkondensator (C3'), eine weitere zweite Induktivität (L2'), eine weitere zweite Diode (D2') sowie ein weiterer zweiter Koppelkondensator (C2').

3. Gleichrichter nach Anspruch 1 oder 2,
**dadurch gekennzeichnet,**
**daß** der ersten Diode (D1) ein erster Umschwingkondensator (CD1) und/oder mindestens einer und/oder jeder zweiten Diode (D2, D2') ein jeweiliger zweiter Umschwingkondensator (CD2, CD2') parallelgeschaltet ist.

4. Gleichrichter nach einem der vorhergehenden Ansprüche,
**dadurch gekennzeichnet,**
**daß** der Kapazitätswert des ersten Koppelkondensators (C1) im wesentlichen gleich der Summe der Kapazitätswerte aller zweiten Koppelkondensatoren (C2, C2') ist.

5. Gleichrichter nach einem der vorhergehenden Ansprüche,
**dadurch gekennzeichnet,**
**daß** der Kapazitätswert jedes Speicherkondensators (C3, C3') im wesentlichen das Zweifache des Kapazitätswerts des ersten Koppelkondensators (C1) beträgt.

6. Gleichrichter nach einem der vorhergehenden Ansprüche,
**dadurch gekennzeichnet,**
**daß** die erste Induktivität (L1) mit mindestens einer zweiten Induktivität (L2, L2') gekoppelt ist.

7. Gleichrichter nach einem der vorhergehenden Ansprüche,
**dadurch gekennzeichnet,**
**daß** mindestens zwei der zweiten Induktivitäten (L2, L2') miteinander gekoppelt sind.

8. Gleichrichter nach einem der vorhergehenden Ansprüche,
**dadurch gekennzeichnet,**
**daß** mindestens zwei Induktivitäten (L1, L2, L2') auf einem einzigen Kern gewickelt sind.

9. Gleichrichter nach einem der Ansprüche 6 bis 8,
**dadurch gekennzeichnet,**
**daß** die Kopplung aus der ersten und mindestens einer der (L1, L2, L2') zweiten Induktivitäten dergestalt ist, daß die Hauptinduktivitäten der ersten und der mindestens einen zweiten Induktivität zu einer Glättung des Ausgangsstroms führen und daß die Streuinduktivitäten der ersten und der mindestens einen zweiten Induktivität als Umschwinginduktivität wirken.

## Claims

1. Rectifier with midpoint feed, for operation at the output of a free-running inverter, comprising:
a first and a second input terminal (A,B), which form an input of the rectifier,
a first and a second output terminal (P,M), which form a first output of the rectifier, the first output terminal (P) forming a positive pole and the second output terminal (M) forming a negative pole of the first output of the rectifier,
a series circuit comprising a first and a second coupling capacitor (C1, C2), which is arranged in parallel with the first output, a midpoint of the series circuit being connected to the second input terminal (B),
a series circuit comprising a first and a second diode (D1, D2), a midpoint of the series circuit made up of the first and the second diode (D1, D2) being connected to the first input terminal (A), and the first diode (D1) being connected to the first coupling capacitor (C1) via a first inductor (L1), and the second diode (D2) being connected to the second coupling capacitor (C2) via a second inductor (L2), **characterized in that** a storage capacitor (C3) is arranged in parallel with the series circuit comprising the first and second diodes (D1, D2).

2. Rectifier according to Claim 1,
**characterized in that**, for each further output (P', M) of the rectifier, a following combination is connected in parallel with the corresponding combination for the first output (P, M):
a further storage capacitor (C3'), a further second inductor (L2'), a further second diode (D2') and a further second coupling capacitor (C2').

3. Rectifier according to Claim 1 or 2,
**characterized in that** the first diode (D1) has a first polarity-reversal capacitor (C_{D}1) connected in parallel with it, and/or at least one and/or each second diode (D2, D2') has a respective second polarity-reversal capacitor (C_{D}2, C_{D}2') connected in parallel with it.

4. Rectifier according to one of the preceding Claims,
**characterized in that** the capacitance value of the first coupling capacitor (C1) is essentially the same as the sum of the capacitance values of all the second coupling capacitors (C2, C2').

5. Rectifier according to one of the preceding claims,
**characterized in that** the capacitance value of each storage capacitor (C3, C3') is essentially twice the capacitance value of the first coupling capacitor (C1).

6. Rectifier according to one of the preceding claims,
**characterized in that** the first inductor (L1) is coupled to at least one second inductor (L2, L2').

7. Rectifier according to one of the preceding claims,
**characterized in that** at least two of the second inductors (L2, L2') are coupled to one another.

8. Rectifier according to one of the preceding claims,
**characterized in that** at least two inductors (L1, L2, L2') are wound on a single core.

9. Rectifier according to one of Claims 6 to 8, **characterized in that** the coupling comprising the first and at least one of the second inductors (L1, L2, L2') is such that the principal inductances of the first and of the at least one second inductor cause the output current to be smoothed, and that the leakage inductances of the first and of the at least one second inductor act as a polarity-reversal inductance.

## Revendications

1. Redresseur avec alimentation médiane pour un fonctionnement à la sortie d'un onduleur à oscillation libre, comprenant :
une première et une deuxième borne d'entrée (A, B) qui forment une entrée du redresseur,
une première et une deuxième borne de sortie (P, M) qui forment une première sortie du redresseur, la première borne de sortie (P) formant un pôle positif et la deuxième borne de sortie (M) formant un pôle négatif de la première sortie du redresseur,
un circuit série composé d'un premier et d'un deuxième condensateur de liaison (C1, C2) et monté en parallèle avec la première sortie, un point médian du circuit série étant relié à la deuxième borne d'entrée (B),
un circuit série composé d'une première et d'une deuxième diode (D1, D2), un point médian du circuit série composé de la première et de la deuxième diode (D1, D2) étant relié à la première borne d'entrée (A), la première diode (D1) étant reliée par l'intermédiaire d'une première inductance (L1) au premier condensateur de liaison (C1) et la deuxième diode (D2) étant reliée par l'intermédiaire d'une deuxième inductance (L2) au deuxième condensateur de liaison (C2),
**caractérisé par le fait que**
un condensateur de stockage (C3) est monté en parallèle au circuit série composé de la première et de la deuxième diode (D1, D2).

2. Redresseur selon la revendication 1,
**caractérisé par le fait que**,
pour chaque autre sortie (P', M) du redresseur, une combinaison ci-dessous est branchée en parallèle de la combinaison correspondante de la première sortie (P, M) :
un autre condensateur de stockage (C3'), une autre deuxième inductance (L2'), une autre deuxième diode (D2') ainsi qu'un autre deuxième condensateur de liaison (C2').

3. Redresseur selon la revendication 1 ou 2,
**caractérisé par le fait que**
un condensateur d'inversion d'oscillation (CD1) est branché en parallèle de la première diode (D1) et/ou qu'un deuxième condensateur d'inversion d'oscillation (CD2, CD2') respectif est branché en parallèle d'une et/ou de chaque deuxième diode (D2, D2').

4. Redresseur selon l'une des revendications précédentes,
**caractérisé par le fait que**
la valeur capacitive du premier condensateur de liaison (C1) est globalement égale à la somme des valeurs capacitives de tous les condensateurs de liaison (C2, C2').

5. Redresseur selon l'une des revendications précédentes,
**caractérisé par le fait que**
la valeur capacitive de chaque condensateur de stockage (C3, C3') est globalement égale au double de la valeur capacitive du premier condensateur de liaison (C1).

6. Redresseur selon l'une des revendications précédentes,
**caractérisé par le fait que**
la première inductance (L1) est couplée à au moins une deuxième inductance (L2, L2').

7. Redresseur selon l'une des revendications précédentes,
**caractérisé par le fait que**
au moins deux des deuxièmes inductances (L2, L2') sont couplées entre elles.

8. Redresseur selon l'une des revendications précédentes,
**caractérisé par le fait que**
au moins deux inductances (L1, L2, L2') sont enroulées sur un seul noyau.

9. Redresseur selon l'une des revendications 6 à 8,
**caractérisé par le fait que**
le couplage de la première inductance et au moins de l'une des deuxièmes inductances (L1, L2, L2') est conçu de telle sorte que les inductances principales de la première inductance et de la au moins une deuxième inductance entraînent un lissage du courant de sortie et que les inductances de fuite de la première inductance et de la au moins une deuxième inductance agissent comme inductance d'inversion d'oscillation.
